# EUROPÄISCHE PATENTSCHRIFT

(11) **EP 1 710 651 B1**
(45) Veröffentlichungstag und Bekanntmachung des Hinweises auf die Patenterteilung: **02.09.2009**
(21) Anmeldenummer: 06005848.4
(22) Anmeldetag: 22.03.2006
(51) Int. Cl.: G05D 3/10, F24J 2/38, F24J 2/40, F24J 2/52, F24J 2/54, H01L 31/042

(54) **Nachführeinrichtung für eine Photovoltaikanlage**
Tracking device for a photovoltaic system
Dispositif de poursuite pour une installation photovoltaïque

(30) Priorität: 30.03.2005 DE 102005014320
(43) Veröffentlichungstag der Anmeldung: 11.10.2006
(73) Patentinhaber: Gümpelein, Manuela, 91567 Herrieden (DE)
(72) Erfinder: Gümpelein, Rudolf, 91567 Herrieden (DE)
(74) Vertreter: Blaumeier, Jörg

(56) Entgegenhaltungen:
- DE-B- 10 144 601
- DE-U1- 9 320 369
- DE-U1- 9 405 983
- US-A- 4 172 739
- US-A- 5 600 124

## Beschreibung

Die Erfindung betrifft eine Nachführeinrichtung für eine Photovoltaikanlage mit wenigstens einem der Sonne nachzuführenden Photovoltaikmodul, umfassend eine das Photovoltaikmodul tragende und um eine im Wesentlichen vertikale Achse drehbar gelagerte Tragkonstruktion zur Nachführung in der vertikalen Achse mittels eines Antriebs sowie Mittel zur Nachführung in einer horizontalen Achse durch Verschwenkung des Photovoltaikmoduls. Eine nachführeinrichtung gemäß dem oberbegriff des Anspruchs 1 ist in US-A-4 772 739 offenbart.

Bei Photovoltaikanlagen hängt der erreichbare Energieertrag vom Einfallswinkel der Sonne relativ zum Photovoltaikmodul ab, sodass es zur Steigerung des Energieertrags zweckmäßig ist, Einrichtungen zu verwenden, die die Photovoltaikmodule der Anlage dem je nach Jahres- oder Tageszeit wechselnden Sonnenstand nachführen. Hierbei ist zum einen die vertikale Nachführung zu nennen, bei der das Photovoltaikmodul durch eine Drehung der das Modul tragenden Tragkonstruktion in einer Richtung, die im Wesentlichen vertikal zur Erdoberfläche steht, dem Sonnenlauf nachgeführt wird. Daneben ist bei einer zweiachsigen Nachführung eine horizontale Nachführung derart möglich, dass das Photovoltaikmodul in einer horizontalen Achse verschwenkt bzw. geneigt wird, sodass idealerweise ein rechter Winkel zur Sonne gewährleistet wird.

Bei derartigen Nachführeinrichtungen ist jedoch sowohl für die Nachführung in der vertikalen Achse als auch für die Nachführung in der horizontalen Achse jeweils ein separater Antrieb erforderlich, um die nötigen Stellbewegungen zu erzeugen. Dadurch werden bei elektrischer Antriebsweise Getriebe, Motoren und Steuergeräte mehrfach erforderlich, wobei zudem jeweils eine gegebenenfalls aufwändige Steuereinrichtung erforderlich ist. Hiermit verbunden sind erhebliche Kosten für Photovoltaikanlagen, die eine derartige zweiachsige Nachführung aufweisen. Infolgedessen konnten nachzuführende Photovoltaikanlagen bisher nur geringe Marktanteile erzielen, da der Energiemehrertrag von etwa 35 % durch die zusätzlich aufzubringenden Kosten weitgehend aufgehoben wird.

Der Erfindung liegt somit die Aufgabe zugrunde, eine diesbezüglich verbesserte Nachführeinrichtung für eine Photovoltaikanlage anzugeben.

Zur Lösung dieser Aufgabe ist bei einer Nachführeinrichtung der eingangs genannten Art erfindungsgemäß eine mechanische Kopplung der vertikalen und horizontalen Nachführung vorgesehen, derart, dass die Nachführung in der horizontalen Achse über eine Stellbewegung des Antriebs für die vertikale Achse bewirkbar ist.

Somit wird bei der erfindungsgemäßen Nachführeinrichtung vorteilhafterweise nur eine einzige Stellbewegung benötigt, die sowohl die Nachführung in der vertikalen als auch in der horizontalen Achse bewirkt. Dazu ist eine mechanische Kopplung zwischen der vertikalen und horizontalen Nachführung vorgesehen, die gegebenenfalls durch vergleichsweise einfache mechanische Bauteile realisiert werden kann. Dadurch wird die Stellbewegung, die durch den Antrieb für die vertikale Achse bewirkt wird, der manuell oder automatisch sein kann, übertragen, um so eine Nachführung in der horizontalen Achse zu erhalten. Durch die mechanische Kopplung lässt sich technisch einfach eine zweiachsige Nachführung realisieren, die zudem wartungsarm ist. Ein eigener Antrieb, um die Nachführung in der horizontalen Achse zu erreichen, entfällt.

Erfindungsgemäß können die Mittel zur Nachführung in der horizontalen Achse einen Kurvenring oder eine Kurvenscheibe umfassen. Die von einem solchen Ring oder einer solchen Scheibe gebildete Kurve ist in diesem Fall so ausgebildet, dass durch ein "Nachfahren" der Kurve mittels der durch die Kopplung mit der vertikalen Nachführung gegebenen Stellbewegung die zum Ausgleich des sich verändernden Sonnenstands erforderliche Schwenkbewegung in der horizontalen Achse erreicht wird. Hierzu ist der Kurvenring bzw. die Kurvenscheibe je nach Art der Bewegungsübertragung auf das Photovoltaikmodul so angeordnet, dass unterschiedliche Abstände zum Photovoltaikmodul, die dann zu einer Neigung desselben führen, vorgegeben werden.

Der Kurvenring oder die Kurvenscheibe kann um die Tragkonstruktion herum angeordnet und/oder, insbesondere mittels wenigstens eines Halterungselements, an einem Befestigungselement gehaltert sein. Durch die Anordnung des Ringes bzw. der Scheibe um die Tragkonstruktion herum, an der das Solarmodul gehaltert ist, wird eine räumliche Nähe zwischen den die vertikale und die horizontale Nachführung bewirkenden Elementen erreicht, sodass Verluste durch lange Wege vermieden werden können. Bei einer Anordnung im Wesentlichen konzentrisch um die Tragkonstruktion herum kann die Drehbewegung derselben, die zur vertikalen Nachführung dient, auf einfache Art und Weise für die horizontale Nachführung genutzt werden. Die zusätzliche Halterung des Nachführungsmittels an einem Befestigungselement bewirkt, dass die Kurvenform ortsfest angeordnet ist, also insbesondere nicht der Drehbewegung der Tragkonstruktion unterworfen. Das Befestigungselement kann der Verankerung der Nachführeinrichtung mit dem Photovoltaikmodul im Montagebereich, also beispielsweise auf der Erdoberfläche oder auf einem Dachbereich, dienen. Das Befestigungselement kann mehrteilig ausgebildet sein und insbesondere auch die Lagerung der Tragkonstruktion einschließen.

Der Kurvenring bzw. die Kurvenscheibe können aus Segmenten aufgebaut sein. Es können auch ein oder mehrere Segmente verwendet werden, die keinen Vollkreis, sondern beispielsweise einen Halbkreis oder einen anderen Kreisabschnitt beschreiben. Der Kurvenring bzw. die Kurvenscheibe oder das Segment können bei einer Anordnung um die Tragkonstruktion herum auf der vertikalen Achse drehbar gelagert werden. Eine solche Anordnung kann so ausgeführt sein, dass sich die Scheibe bzw. der Ring oder das oder die Segmente nicht generell mit der vertikalen Achse bewegen, sondern dass ein zusätzlicher Antrieb, der beispielsweise in Form eines um die Kurvenscheibe oder den Kurvenring gelegten Seils wirkt, vorgesehen ist, so dass die horizontale Achse unabhängig von der vertikalen Achse nachgeführt werden kann. In diesem Fall ist durch den zusätzlichen Antrieb eine weitere Feineinstellung bezüglich der horizontalen Nachführung möglich.

Erfindungsgemäß kann die mechanische Kopplung ein zwischen dem Photovoltaikmodul und der Tragkonstruktion schwenkgelagertes Übertragungsmittel zur Übertragung der Stellbewegung auf das Photovoltaikmodul für die Nachführung in der horizontalen Achse umfassen. Auf diese Weise wird eine Verbindung zwischen der für die vertikale Nachführung erzeugten Drehbewegung der Tragkonstruktion und dem Photovoltaikmodul hergestellt, über die die Bewegung des Photovoltaikmoduls in einem weiteren Freiheitsgrad möglich wird. So kann einfach die Neigung in der horizontalen Achse realisiert werden, wobei durch die Schwenklagerung des Übertragungsmittels eine flexible horizontale Nachführung, insbesondere auch in Verbindung mit einer durch einen Kurvenring oder eine Kurvenscheibe vorgegebenen Form, ermöglicht wird.

Hierzu umfasst das Übertragungsmittel vorteilhafterweise ein Gestänge und/oder ein Gabelelement, insbesondere zum Angreifen und/oder Eingreifen an einem Kurvenring und/oder einer Kurvenscheibe. Über ein Gestänge kann eine größere Entfernung zwischen dem Lagerungspunkt bzw. -bereich an der Tragkonstruktion und dem Photovoltaikmodul überbrückt werden. Dabei wird über das Gabelelement das "Nachfahren" einer vorgegebenen Form wie einer Kurve für eine horizontale Nachführung ermöglicht. Ein Gabelelement kann beispielsweise so ausgebildet sein, dass die beiden Zinken eine Ringform vollständig umschließen, sodass bei der durch die Tragkonstruktion vorgegebenen Drehbewegung die Kurvenform des Rings durch die Gabel abgefahren und mittels der Verbindung zum Photovoltaikmodul, die beispielsweise über ein Gestänge bewirkt wird, in eine horizontale Neigung desselben übertragen wird. Alternativ kann ein solches Gabelelement bei einer Kurvenscheibe oberseitig angreifen, sodass auf diese Art und Weise ebenfalls die Kurvenform bei einer Drehung nachgefahren wird. Wird lediglich ein Gestänge z. B. aus zwei verbundenen Stäben verwendet, so kann dieses aufgrund der wirkenden Schwerkraft bei einem direkten Aufliegen auf der Oberseite z. B. eines Kurvenringes bzw. einer Kurvenscheibe ebenfalls verwendet werden, um die erforderliche horizontale Neigung zu erzielen. Insgesamt entfällt somit ein eigener Antrieb für die Nachführung in der horizontalen Achse.

Weiterhin ist vorgesehen, dass die Nachführeinrichtung bei einer Photovoltaikanlage mit wenigstens zwei Photovoltaikmodulen über wenigstens ein Umschlingungsmittel, insbesondere ein Seil und/oder ein Band und/oder einen Riemen und/oder eine Kette, mit wenigstens einer weiteren, einem anderen Photovoltaikmodul zugehörigen Nachführeinrichtung verbunden sein kann. Auf diese Art und Weise wird eine mechanische Kopplung zwischen verschiedenen Nachführeinrichtungen erreicht. Dies ermöglicht eine Kraftübertragung zwischen den Nachführeinrichtungen unterschiedlicher Module, wobei nicht nur zwei oder mehrere Nachführeinrichtungen in einer Linie, sondern auch weitere Nachführeinrichtungen in einem Winkel beispielsweise senkrecht hierzu miteinander verbunden werden können.

Zur Übertragung der Stellbewegung auf die Tragkonstruktion kann ein an der Tragkonstruktion befestigtes Mitnehmerelement, insbesondere ein die Tragkonstruktion im Wesentlichen konzentrisch umgebendes Ring- oder Scheibenelement, vorgesehen sein. Das Vorsehen eines eigens ausgestalteten Mitnehmerelements erleichtert das Angreifen an der beispielsweise in Form eines Rohrs gegebenen Tragkonstruktion, um so die Stellbewegung präzise und verlustarm auf die Tragkonstruktion und damit das Photovoltaikmodul zu übertragen. Ein einfach herzustellendes Mitnehmerelement ist dabei ein Ring oder eine Scheibe, die die Tragkonstruktion bzw. die durch die Tragkonstruktion definierte Drehachse konzentrisch umgeben kann. Für eine präzise Übertragung können zusätzlich Führungselemente an diesem Ring- oder Scheibenelement und allgemein an einem Mitnehmerelement vorgesehen sein, beispielsweise Vertiefungen oder Ösen.

Der Schwenkbereich für die Nachführung in der horizontalen Achse kann zwischen 0° bei einer horizontalen Anordnung des Photovoltaikmoduls und 60° liegen. Bei einer Neigung von 0° ist das Photovoltaikmodul horizontal, also im Wesentlichen parallel zur Erdoberfläche angeordnet. So lässt sich ein diffuser Lichteinfall aus unterschiedlichen Richtungen nutzen. Mit einer Neigung von bis zu 60° ist eine Einstellung derart möglich, dass der Lichteinfall im Wesentlichen mit einem Winkel von 90° erfolgt. Selbstverständlich sind gegebenenfalls auch Winkel von mehr als 60° möglich.

Zur Übertragung der Stellbewegung auf die Tragkonstruktion kann wenigstens ein, insbesondere an einem Mitnehmerelement angreifendes weiteres, Übertragungselement vorgesehen sein. Dadurch kann der Antrieb, sei er manuell, hydraulisch oder elektrisch, räumlich beabstandet zur Tragkonstruktion angeordnet sein. Ein Bediener muss sich nicht direkt in die Nähe der Tragkonstruktion bewegen, während gleichzeitig der eigentliche Antrieb beispielsweise gegenüber Witterungseinflüssen geschützt gelagert werden kann.

Das Übertragungselement kann einem Umschlingungsmittel, insbesondere einem Seil, einem Band, einem Riemen oder einer Kette, zwischen zwei Nachführeinrichtungen entsprechen. Es sind auch Umschlingungsmittel mit Seil- und Kettenanteilen und andere Mischformen möglich. Somit kann zur Übertragung der die vertikale und horizontale Nachführung bewirkenden Stellbewegung ein Element verwendet werden, das zur mechanischen Kopplung mehrerer Nachführeinrichtungen bereits vorgesehen ist. Dabei reicht dieses eine Übertragungselement zur Übertragung einer Stellbewegung sowohl auf eine ursprüngliche als auch auf eine oder mehrere weitere Nachführeinrichtungen aus. Gegebenenfalls kann das Umschlingungsmittel indirekt mit dem Antrieb verbunden sein, sodass eine weitere Übertragung, beispielsweise für eine bessere räumliche Anordnung des Antriebs, vorgesehen sein kann.

Erfindungsgemäß kann bei mehreren, miteinander verbundenen Nachführeinrichtungen eine Nachführung der mehreren Nachführeinrichtungen durch eine einzige Stellbewegung, insbesondere eines einzigen Antriebs, bewirkbar sein. Hierzu lässt sich die mechanische Kopplung zwischen verschiedenen Nachführeinrichtungen nutzen, die in diesem Falle gleichzeitig als Übertragungselement für die Stellbewegung ausgebildet ist, wodurch die ansonsten bei nicht gekoppelten Nachführeinrichtungen erforderlichen mehrfachen Getriebe bzw. Motoren und Steuergeräte vorteilhaft entfallen. Der Anzahl der somit durch eine einzige Stellbewegung betriebenen Nachführeinrichtungen ist lediglich durch die auftretenden Verluste, beispielsweise durch Reibung, eine Grenze gesetzt. So können nicht nur zwei, sondern auch ein Feld mehrerer in vertikaler und horizontaler Richtung zueinander angeordneter Solarmodule mit jeweils vorhandenen Nachführeinrichtungen mit einer einzigen Stellbewegung dem Sonnenstand nachgeführt werden.

Zur Erzeugung der Stellbewegung für die Nachführung kann ein manueller, hydraulischer und/oder elektrischer Antrieb, insbesondere ein Elektromotor, vorgesehen sein. Eine elektrischer Antrieb erleichtert die Bedienung, ist jedoch mit höheren Investitionskosten verbunden. Eine Kombination eines manuellen und elektrischen Antriebs bietet eine zusätzliche Sicherheit gegenüber Ausfällen und eine Möglichkeit zur variablen Nachführung je nach den aktuell vorgefundenen Bedingungen. So können in einer Steuerung eines elektrischen Antriebs, beispielsweise eines Elektromotors, eine Reihe unterschiedlicher Steuerungsprogramme verwirklicht sein, wobei über einen manuellen Antrieb gegebenenfalls Stellbewegungen erzeugt werden können, die beispielsweise im Rahmen einer Wartung oder einer Reinigung benötigt werden.

Der Antrieb kann über eine Steuerungseinrichtung steuerbar sein. Hierbei sind insbesondere programmierbare Steuerungseinrichtungen sinnvoll, die auch bei Abwesenheit des Bedieners eine Nachführung des Photovoltaikmoduls ermöglichen, wobei vorgegebene Programme oder auch Rückkopplungsmechanismen, also Regelungen, verwendet werden können. Hierzu können gegebenenfalls an den Nachführeinrichtungen bzw. Photovoltaikmodulen Messsensoren vorhanden sein, die beispielsweise den Lichteinfall aufnehmen oder die durchgeführte Nachführung in vertikaler oder horizontaler Richtung überprüfen. Die Steuerungseinrichtung kann auch mechanisch betrieben sein, beispielsweise in Anwendungsfällen, bei denen eine größere Robustheit bzw. eine einfache Wartung erforderlich sind.

Daneben betrifft die Erfindung eine Photovoltaikanlage, die eine Nachführeinrichtung wie vorstehend beschrieben aufweist. Eine solche Photovoltaikanlage mit Nachführeinrichtungen für eine vertikale und horizontale Nachführung, also in zwei Achsen, kann mehrere Photovoltaikmodule, beispielsweise ein komplettes Feld von Modulen, zum Beispiel mit 10 bis 100 Modulen, umfassen. Durch die mechanische Kopplung der horizontalen Nachführung an die vertikale Nachführung, indem diese durch eine Stellbewegung für die vertikale Achse angetrieben wird, wird vorteilhafterweise eine einfache horizontale Nachführung erreicht, wobei insbesondere auf separate Antriebe verzichtet werden kann. Dieser Vorteil wirkt sich besonders bei einer Kopplung mehrerer Photovoltaikmodule aus, wenn diese derart gekoppelt sind, dass eine Stellbewegung zur Nachführung mehrerer, beispielsweise in einer Linie oder unter Winkeln miteinander verbundener Module, verwendet werden kann.

Weitere Vorteile und Einzelheiten ergeben sich anhand der folgenden Ausführungsbeispiele sowie aus den Zeichnungen. Dabei zeigen:
- Fig. 1: eine erfindungsgemäße Nachführeinrichtung und ein zugehöriges Photovoltaikmodul,
- Fig. 2: eine Detailansicht einer erfindungsgemäßen Nachführeinrichtung,
- Fig. 3: eine erfindungsgemäße Nachführeinrichtung mit einem horizontal ausgerichteten Photovoltaikmodul,
- Fig. 4: eine Detailansicht einer erfindungsgemäßen Nachführeinrichtung mit einer Kurvenscheibe und
- Fig. 5: gekoppelte Nachführeinrichtungen einer erfindungsgemäßen Photovoltaikanlage und
- Fig. 6: eine Detailansicht einer erfindungsgemäßen Nachführeinrichtung mit einer um die vertikale Achse drehbar gelagerten Kurvenscheibe.

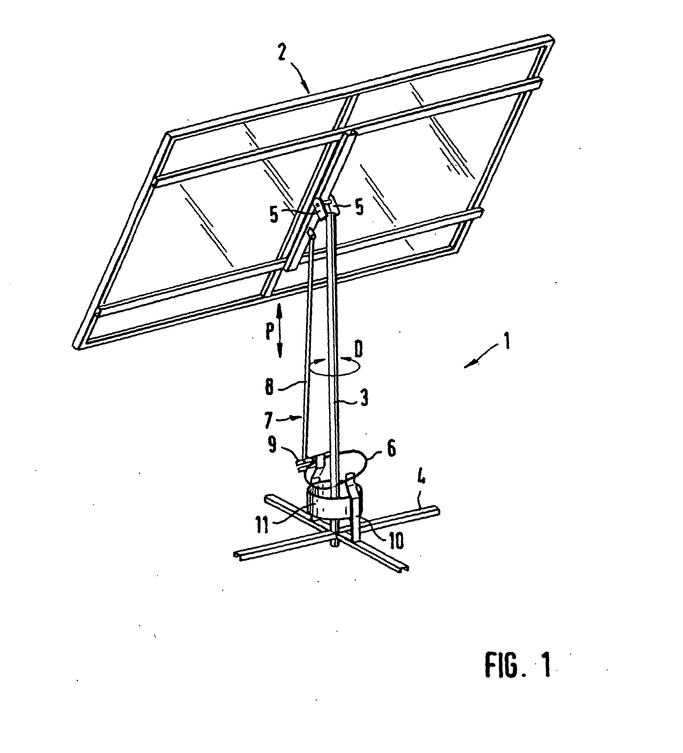

Fig. 1 zeigt eine erfindungsgemäße Nachführeinrichtung 1 und ein zugehöriges Photovoltaikmodul 2. Die Nachführeinrichtung 1 umfasst eine Tragkonstruktion 3, die um eine vertikal zum Erdboden angeordnete Achse drehbar ist, um so die vertikale Nachführung zu ermöglichen. Dies wird durch den Drehpfeil D, der die vertikale Drehung symbolisiert, angedeutet. Die Tragkonstruktion 3 ist an einem Befestigungselement 4 gelagert und gehaltert, das den festen Bezugspunkt für die Drehung liefert. Die Ausbildung des Befestigungselements 4 ist je nach Anwendungsbereich der Photovoltaikanlage unterschiedlich, je nachdem, ob eine Bodenmontage oder eine Dachmontage oder dergleichen vorgesehen ist.

Die Tragkonstruktion 3 ist an ihrem oberen Ende mit dem Photovoltaikmodul 2 verbunden, wozu das Photovoltaikmodul 2 und auch die Tragkonstruktion 3 entsprechende Montagelemente 5 aufweisen.

Die Nachführung in einer horizontalen Achse, sodass das Photovoltaikmodul 2 in seiner Neigung verändert werden kann, erfolgt über einen Kurvenring 6 in Verbindung mit einem schwenkgelagerten Übertragungsmittel 7. Das Übertragungsmittel 7 ist zum einen über ein Montageelement 5 mit dem Photovoltaikmodul 2 verbunden, andererseits im Unterbereich an die Tragkonstruktion gekoppelt. Hierzu weist das Übertragungsmittel 7 ein oberseitiges Gestänge 8 auf und ein im unteren Bereich angeordnetes Gabelelement 9, das in den Kurvenring 6 eingreift. Für den Kurvenring 6 sind Halterungselemente 10 vorgesehen, die diesen mit dem Befestigungselement 4 verbinden, um so eine räumliche Fixierung zu erreichen. Durch eine über einen hier nicht dargestellten Antrieb erzeugte Drehbewegung der Tragkonstruktion 3 wird auch das schwenkgelagerte Übertragungsmittel 7 bewegt, wobei der Kurvenring 6 mittels des dort eingreifenden Gabelelements 9 "nachgefahren" wird, wodurch mittels der Stellbewegung für die vertikale Nachführung auch eine horizontale Neigung des Photovoltaikmoduls erreicht wird, angepasst an den zu erwartenden Sonnenstand. Die horizontale Neigungsmöglichkeit wird durch den Doppelpfeil P am Übertragungsmittel 7 symbolisiert. So ist es erfindungsgemäß nicht erforderlich, getrennte Stellbewegungen zum einen für die vertikale, zum anderen für die horizontale Nachführung zu erzeugen. Dadurch kann gegebenenfalls auf doppelte Antriebseinheiten verzichtet werden. Weiterhin dargestellt ist ein Mitnehmerelement 11, das um die Tragkonstruktion 3 herum angeordnet und als Ringscheibe ausgebildet ist. Dieses Mitnehmerelement 11 dient zur Übertragung der Stellbewegung, beispielsweise in Verbindung mit einem hier nicht dargestellten Seil, um eine präzisere und komfortablere Drehung der Tragkonstruktion 3 zu erreichen.

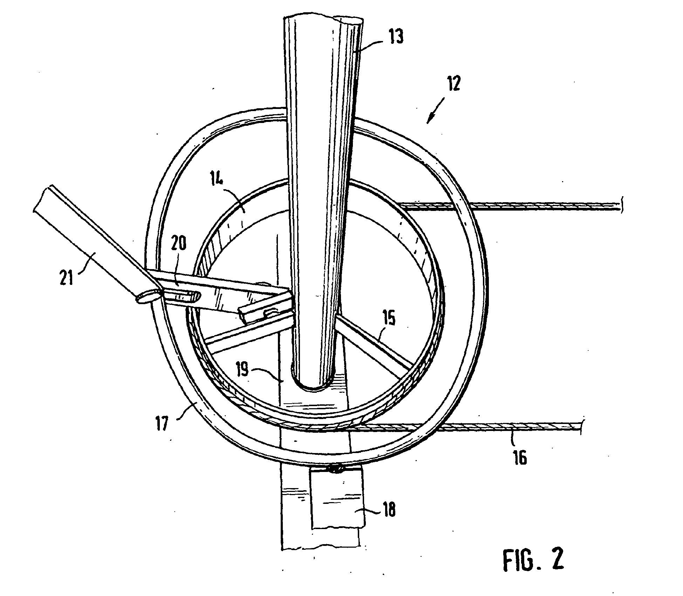

Die Fig. 2 zeigt eine Detailansicht einer erfindungsgemäßen Nachführeinrichtung 12, bei der die Tragkonstruktion 13 als Rundrohr ausgebildet ist und konzentrisch von einem Mitnehmerelement 14 umgeben wird. Das Mitnehmerelement 14, das als Ringscheibe ausgebildet ist, ist über Verbindungsstreben 15 mit der Tragkonstruktion 13 verbunden. Über das Mitnehmerelement 14 kann mittels des Seilelements 16 die Stellbewegung eines hier nicht dargestellten mechanischen oder elektrischen Antriebs auf die Tragkonstruktion 13 übertragen werden. So kann die Nachführung in der vertikalen Achse erreicht werden.

Darüber hinaus umfasst die Nachführeinrichtung 12 einen Kurvenring 17, der über Halterungselemente 18 mit einem drehfesten Befestigungselement 19 verbunden ist, auf dem die Tragkonstruktion 13 gelagert ist. Über ein Gabelelement 20, das den Kurvenring 17 umgreift und mit der drehbaren Tragkonstruktion 13 verbunden ist, kann, mithilfe des Gestänges 21, das im nicht dargestellten oberen Endbereich mit einem Photovoltaikmodul verbunden ist, die Stellbewegung zur Drehung der Tragkonstruktion 13 für eine horizontale Neigung des Photovoltaikmoduls genutzt werden. Dies geschieht, indem bei einer Drehung der Tragkonstruktion 13 das Gabelelement 20 mitgeführt wird, das hierbei den in vertikaler Richtung unterschiedlich hoch verlaufenden Kurvenring 17 "nachfährt". Dies wird durch eine Schwenklagerung des Gabelelements 20 erreicht, die in Verbindung mit der Schwenklagerung des Gestänges 21 eine flexible Neigungsbewegung derart, dass das Photovoltaikmodul zwischen einem Winkel von 0°, also im Wesentlichen parallel zur Erdoberfläche, und etwa 60° verschwenkbar ist.

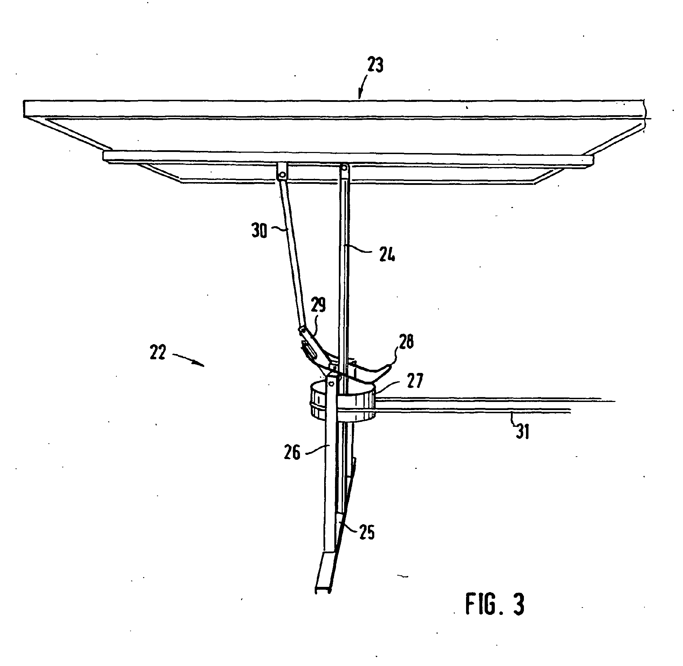

Fig. 3 zeigt eine erfindungsgemäße Nachführeinrichtung 22 mit einem horizontal ausgerichteten Photovoltaikmodul 23. In dieser horizontalen Anordnung, also einer Neigung von 0° des Photovoltaikmoduls 23, ist insbesondere eine Ausrichtung des Moduls 23 für diffus einstrahlendes Licht gegeben. Die Tragkonstruktion 24 für die Drehbewegung ist unterseitig wiederum auf einem Befestigungselement 25 gelagert, an dem auch Halterungselemente 26 für ein Mitnehmerelement 27 befestigt sind.

Die Nachführung in der horizontalen Achse wird wiederum über einen Kurvenring 28 in Verbindung mit einem Gabelelement 29 und einer Stange 30 erreicht.

Die Stellbewegung für die Tragkonstruktion 24 wird über einen Riemen 31, der das Mitnehmerelement 27 umschlingt, übertragen. Hierzu ist der Riemen in einer hier nicht dargestellten Vertiefung des Mitnehmerelements 27 geführt, um ein Abrutschen zu verhindern.

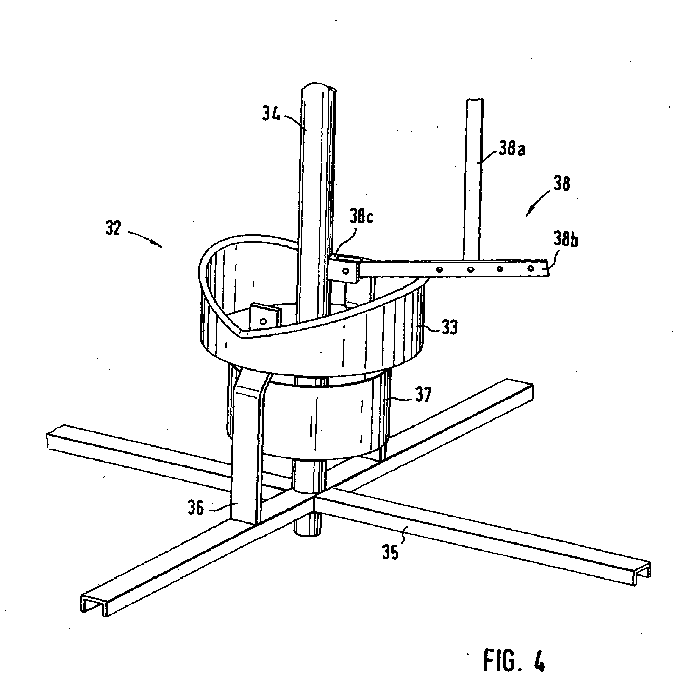

Fig. 4 zeigt eine Detailansicht einer erfindungsgemäßen Nachführeinrichtung 32 mit einer Kurvenscheibe 33. Die Tragkonstruktion 34 der Nachführeinrichtung 32 ist auf dem Befestigungselement 35 gelagert, auf dem auch die Halterungselemente 36, die die Kurvenscheibe 33 in Position halten, befestigt sind. Über das Mitnehmerelement 37 wird die Stellbewegung eines nicht dargestellten Antriebs auf die Tragkonstruktion 34 übertragen.

Die horizontale Nachführung wird wiederum durch "Nachfahren" der Kurvenform der Kurvenscheibe 33 erreicht, wobei in diesem Fall zur Übertragung der "Nachfahrbewegung" auf das nicht dargestellte Photovoltaikmodul ein Gestänge 38 vorgesehen ist, das im Wesentlichen aus zwei Bestandteilen 38a und 38b besteht, die mittels eines Lagerungselements 38c an der Tragkonstruktion 34 schwenkgelagert sind. Die beiden Bestandteile 38a und 38b sind ihrerseits Stangen, die in einem veränderbaren Winkel miteinander verbunden sind. Aufgrund der wirkenden Schwerkraft wird der Bestandteil 38b stets so gehalten, dass er auf der Oberseite der Kurvenscheibe 33 aufliegt, wodurch die Höhenunterschiede in eine entsprechende horizontale Neigung des Photovoltaikmoduls umgesetzt werden können.

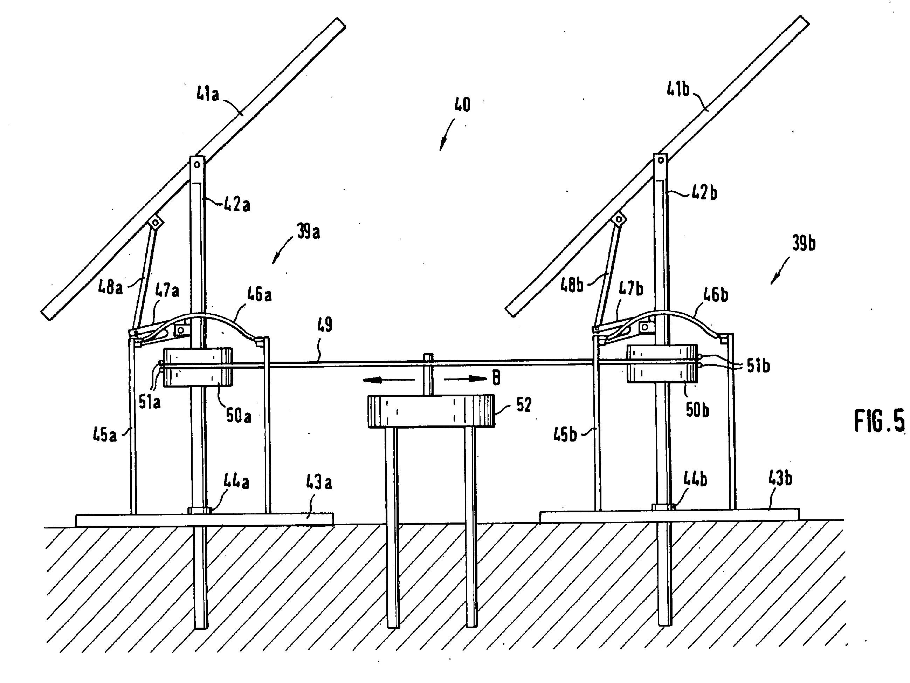

Fig. 5 zeigt gekoppelte Nachführeinrichtungen 39a und 39b einer erfindungsgemäßen Photovoltaikanlage 40. Die Photovoltaikanlage 40 umfasst darüber hinaus weitere hier nicht dargestellte Nachführeinrichtungen und Photovoltaikmodule. Die Nachführeinrichtungen 39a und 39b sind jeweils mit zugehörigen Photovoltaikmodulen 41 a und 41 b verbunden, die von Tragkonstruktionen 42a und 42b getragen werden. Die Tragkonstruktionen 42a und 42b sind ihrerseits auf Befestigungselementen 43a, b gelagert, wozu hier die entsprechenden Lagerungen 44a und 44b dargestellt sind. Halterungselemente 45a, b verbinden Kurvenringe 46a, b mit den Befestigungselementen 43a, b. In die Kurvenringe 46a, b greifen Gabelelemente 47a, 47b ein, die in Verbindung mit einer Stange 48a bzw. 48b eine horizontale Neigung des Photovoltaikmoduls 41 a, 41 b bewirken.

Die Nachführeinrichtungen 39a und 39b sind mithilfe einer Kette 49 mechanisch miteinander gekoppelt. Die Kette 49 umgreift gleichzeitig zur Übertragung einer Stellbewegung auf die Nachführeinrichtungen 39a und 39b Mitnehmerelemente 50a sowie 50b. Für eine präzise Übertragung weisen die Mitnehmerelemente 50a, 50b zusätzlich Führungsmittel 51a, 51b auf. Die Stellbewegung für die horizontale und vertikale Nachführung wird über einen Stellantrieb 52 erzeugt, der hierzu die Kette 49 in den dargestellten Bewegungsrichtungen B bewegt. So ist es möglich, mit einem einzigen Stellantrieb 52, der über eine hier nicht gezeigte Steuerungseinrichtung gesteuert wird, nicht nur sowohl die vertikale als auch die horizontale Nachführung einer Nachführeinrichtung 39a oder 39b zu erreichen, sondern gleichzeitig sowohl die vertikale als auch die horizontale Nachführung mehrerer Nachführeinrichtungen 39, 39b sowie weiterer hier nicht dargestellter Nachführeinrichtungen zu erreichen. Somit entfallen vorteilhafterweise weitere Antriebe und damit das Erfordernis weiterer Motoren bzw. Getriebe und dergleichen. Somit ist erfindungsgemäß eine Nachführung in zwei Achsen kostengünstig möglich, wozu eine vergleichsweise einfache mechanische Kopplung der vertikalen und horizontalen Nachführung verwendet wird sowie, wie hier dargestellt, eine Kopplung der Nachführung mehrerer Nachführeinrichtungen und somit mehrerer Photovoltaikmodule 41a, 41b.

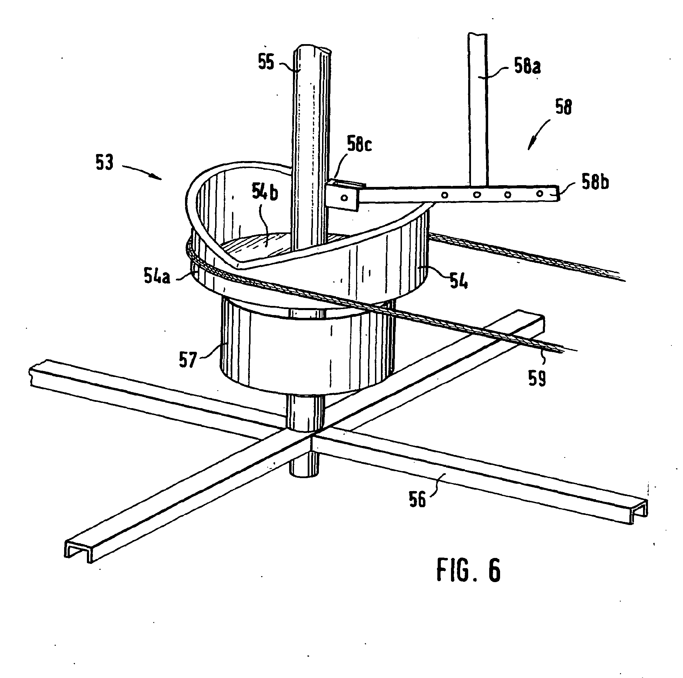

Die Darstellung der Fig. 6 ist eine Detailansicht einer erfindungsgemäßen Nachführeinrichtung 53 mit einer Kurvenscheibe 54, die um die vertikale Achse drehbar gelagert ist. Die Nachführeinrichtung 53 umfasst eine Tragkonstruktion 55, die auf einem Befestigungselement 56 gelagert ist. Ein Mitnehmerelement 57 dient zur Übertragung einer Stellbewegung eines nicht dargestellten Antriebs auf die Tragkonstruktion 55.

Zum Übertragen einer Bewegung, die sich durch das "Nachfahren" der Kurvenform der Kurvenscheibe 54 ergibt, auf das Photovoltaikmodul, das hier nicht dargestellt ist, ist ein Gestänge 58 mit den Bestandteilen 58a bis 58c vorgesehen. Außerdem ist die Kurvenscheibe 54, die neben einem Kurvenelement 54a ein Bodenelement 54b umfasst, drehbar auf der vertikalen Achse, hier gegeben durch die Tragkonstruktion 55, gelagert. Diese Lagerung ist in diesem Fall so ausgebildet, dass die Kurvenscheibe 54 nicht generell mit der Tragkonstruktion 55 bewegt wird, sondern dass hierzu ein zusätzlicher Seilantrieb 59 vorgesehen ist, so dass zwar generell die Nachführung in der horizontalen Achse über eine Stellbewegung des hier nicht dargestellten Antriebs für die vertikale Achse bewirkt wird, aber dennoch zusätzlich die Möglichkeit besteht, die horizontale Achse unabhängig von der vertikalen Achse nachzuführen. Damit können Fehler und Ungenauigkeiten korrigiert werden und generell eine bessere Feineinstellung der Nachführung erreicht werden.

## Patentansprüche

1. Nachführeinrichtung (1, 12, 22, 32, 39a, 39b, 53) für eine Photovoltaikanlage mit wenigstens einem der Sonne nachzuführenden Photovoltaikmodul (2, 23), umfassend eine das Photovoltaikmodul (2, 23) tragende und um eine im Wesentlichen vertikale Achse drehbar gelagerte Tragkonstruktion (3, 13, 24, 34, 42a, 42b, 55) zur Nachführung in der vertikalen Achse mittels eines Antriebs sowie Mittel zur Nachführung in einer horizontalen Achse durch Verschwenkung des Photovoltaikmoduls (2, 23), wobei eine mechanische Kopplung der vertikalen und horizontalen Nachführung vorgesehen ist, die die Nachführung in der horizontalen Achse über eine Stellbewegung des Antriebs für die vertikale Achse bewirkt, **dadurch gekennzeichnet, dass** zur mechanischen Kopplung ein zwischen dem Photovoltaikmodul (2, 23) und der Tragkonstruktion (3, 13, 24, 34, 42a, 42b, 55) schwenkbar gelagertes Übertragungsmittel (7) zur Übertragung der Stellbewegung auf das Photovoltaikmodul (2, 23) für die Nachführung in der horizontalen Achse vorgesehen ist, wobei das Übertragungsmittel (7) ein Gestänge (8, 21, 38, 58) und ein damit gekoppeltes Gabelelement (9, 20, 29, 47a, 47b) umfasst, das an einem Kurvenring (6, 17, 28, 46a, 46b) und/oder an einer Kurvenscheibe (33, 54) angreift oder eingreift.

2. Nachführeinrichtung nach Anspruch 1, **dadurch gekennzeichnet, dass** der Kurvenring (6, 17, 28, 46a, 46b) oder die Kurvenscheibe (33, 54) um die Tragkonstruktion (3, 13, 24, 34, 42a, 42b, 55) herum angeordnet und/oder, insbesondere mittels wenigstens eines Halterungselementes (10, 18, 26, 36, 45a, 45b), an einem Befestigungselement (4, 19, 25, 35, 43a, 43b) gehaltert ist.

3. Nachführeinrichtung nach Anspruch 1 oder 2, **dadurch gekennzeichnet, dass** der Kurvenring oder die Kurvenscheibe (54) oder ein Segment eines Kurvenrings oder einer Kurvenscheibe um die vertikale Achse drehbar gelagert und durch einen separaten Antrieb antreibbar ist.

4. Nachführeinrichtung nach einem der vorangehenden Ansprüche, **dadurch gekennzeichnet, dass** die Nachführeinrichtung (1, 12, 22, 32, 39a, 39b, 53) bei einer Photovoltaikanlage (40) mit wenigstens zwei Photovoltaikmodulen (2, 23) über wenigstens ein Umschlingungsmittel, insbesondere ein Seil (16) und/oder ein Band und/oder einen Riemen (31) und/oder eine Kette (49), mit wenigstens einer weiteren, einem anderen Photovoltaikmodul (2, 23) zugehörigen Nachführeinrichtung (1, 12, 22, 32, 39a, 39b, 53) verbunden ist.

5. Nachführeinrichtung nach einem der vorangehenden Ansprüche, **dadurch gekennzeichnet, dass** zur Übertragung der Stellbewegung auf die Tragkonstruktion (3, 13, 24, 34, 42a, 42b, 55) ein an der Tragkonstruktion (3, 13, 24, 34, 42a, 42b, 55) befestigtes Mitnehmerelement (11, 27, 37, 50a, 50b, 57), insbesondere ein die Tragkonstruktion (3, 13, 24, 34, 42a, 42b, 55) im Wesentlichen konzentrisch umgebendes Ring- oder Scheibenelement, vorgesehen ist.

6. Nachführeinrichtung nach einem der vorangehenden Ansprüche, **dadurch gekennzeichnet, dass** der Schwenkbereich für die Nachführung in der horizontalen Achse zwischen 0° bei einer horizontalen Anordnung des Photovoltaikmoduls (2, 23) und 60° liegt.

7. Nachführeinrichtung nach einem der vorangehenden Ansprüche, **dadurch gekennzeichnet, dass** zur Übertragung der Stellbewegung auf die Tragkonstruktion (3, 13, 24, 34, 42a, 42b) wenigstens ein, insbesondere an einem Mitnehmerelement (11, 27, 37, 50a, 50b, 57) angreifendes weiteres, Übertragungselement vorgesehen ist.

8. Nachführeinrichtung nach Anspruch 7, **dadurch gekennzeichnet, dass** das Übertragungselement einem Umschlingungsmittel, insbesondere einem Seil (16), einem Band, einem Riemen (31) oder einer Kette (49), zwischen zwei Nachführeinrichtungen (1, 12, 22, 32, 39a, 39b) entspricht.

9. Nachführeinrichtung nach einem der vorangehenden Ansprüche, **dadurch gekennzeichnet, dass** bei mehreren, miteinander verbundenen Nachführeinrichtungen (1, 12, 22, 32, 39a, 39b, 53) eine Nachführung der mehreren Nachführeinrichtungen (1, 12, 22, 32, 39a, 39b, 53) durch eine einzige Stellbewegung, insbesondere eines einzigen Antriebs (52), bewirkbar ist.

10. Nachführeinrichtung nach einem der vorangehenden Ansprüche, **dadurch gekennzeichnet, dass** ein manueller und/oder hydraulischer und/oder elektrischer Antrieb (52), insbesondere ein Elektromotor, zur Erzeugung der Stellbewegung für die Nachführung vorgesehen ist.

11. Nachführeinrichtung nach einem der vorangehenden Ansprüche, **dadurch gekennzeichnet, dass** der Antrieb (52) über eine Steuerungseinrichtung steuerbar ist.

12. Photovoltaikanlage, umfassend wenigstens eine Nachführeinrichtung (1, 12, 22, 32, 39a, 39b, 53) nach einem der vorangehenden Ansprüche.

## Claims

1. Tracking mechanism (1, 12, 22, 32, 39a, 39b, 53) for a photovoltaic installation having at least one photovoltaic module (2, 23) intended to track the sun and comprising a support structure (3, 13, 24, 34, 42a, 42b, 55) which supports the photovoltaic module (2, 23) and is rotatably mounted about a substantially vertical axis for tracking in the vertical axis by means of a drive and means for tracking in a horizontal axis by pivoting of the photovoltaic module (2, 23), wherein a mechanical coupling of the vertical and horizontal tracking is provided, which effects tracking in the horizontal axis via a positioning movement of the drive for the vertical axis, **characterised in that** for mechanical coupling a transfer means (7) is provided, pivotably mounted between the photovoltaic module (2, 23) and the support structure (3, 13, 24, 34, 42a, 42b, 55), for transferring the positioning movement to the photovoltaic module (2, 23) for tracking in the horizontal axis, wherein the transfer means (7) comprises a linkage (8, 21, 38, 58) and a fork element (9, 20, 29, 47a, 47b) coupled thereto, which acts on or engages in a cam ring (6, 17, 28, 46a, 46b) and/or on a cam disc (33, 54).

2. Tracking mechanism according to claim 1, **characterised in that** the cam ring (6, 17, 28, 46a, 46b) or the cam disc (33, 54) is disposed around the support structure (3, 13, 24, 34, 42a, 42b, 55) and/or in particular is mounted by means of at least one mounting element (10, 18, 26, 36, 45a, 45b) on a fixing element (4, 19, 25, 35, 43a, 43b).

3. Tracking mechanism according to claim 1 or 2, **characterised in that** the cam ring or the cam disc (54) or a segment of a cam ring or a cam disc is mounted rotatably about the vertical axis and is drivable by a separate drive.

4. Tracking mechanism according to one of the preceding claims, **characterised in that** the tracking mechanism (1, 12, 22, 32, 39a., 39b, 53) in a photovoltaic installation (40) is connected to at least two photovoltaic modules (2, 23) via at last one wraparound means, in particular a cable (16) and/or a strip and/or a belt (31) and/or a chain (49), having at least one further tracking mechanism (1, 12, 22, 32, 39a, 39b, 53) allocated to another photovoltaic module (2, 23).

5. Tracking mechanism according to one of the preceding claims, **characterised in that** in order to transfer the positioning movement to the support structure (3, 13, 24, 34, 42a, 42b, 55) a driver element (11, 27, 37, 50a, 50b, 57) fixed to the support structure (3, 13, 24, 34, 42a, 42b, 55), in particular a ring or disc element substantially concentrically surrounding the support structure (3, 13, 24, 34, 42a, 42b, 55) is provided.

6. Tracking mechanism according to one of the preceding claims, **characterised in that** the pivotal range for tracking in the horizontal axis is between 0° and 60° with a horizontal arrangement of the photovoltaic module (2, 23).

7. Tracking mechanism according to one of the preceding claims, **characterised in that** in order to transfer the positioning movement to the support structure (3, 13, 24, 34, 42a, 42b) at least one further transfer element is provided, in particular acting on a driver element (11, 27, 37, 50a, 50b, 57).

8. Tracking mechanism according to claim 7, **characterised in that** the transfer element corresponds to a wraparound means, in particular a cable (16), a strip, a belt (31) or a chain (49) between two tracking mechanisms (1, 12, 22, 32, 39a, 39b).

9. Tracking mechanism according to one of the preceding claims, **characterised in that** in the case of plural tracking mechanisms (1, 12, 2, 32, 39a, 39b, 53) tracking of the plural tracking mechanisms (1, 12, 22, 32, 39a, 39b, 53) may be effected by a single positioning movement, in particular a single drive (52).

10. Tracking mechanism according to one of the preceding claims, **characterised in that** a manual and/or hydraulic and/or electric drive (52), in particular an electric motor, is provided in order to generate the positioning movement for tracking.

11. Tracking mechanism according to one of the preceding claims, **characterised in that** the drive (52) may be controlled via a control mechanism.

12. Photovoltaic installation, comprising at least one tracking mechanism (1, 12, 22, 32, 39a, 39b, 53) according to one of the preceding claims.

## Revendications

1. Dispositif d'orientation (1, 12, 22, 32, 39a, 39b, 53) pour installation photovoltaïque avec au moins un module photovoltaïque (2, 23) à orienter selon le soleil, comprenant une structure de support (3, 13, 24, 34, 42a, 42b, 56) supportant le module photovoltaïque (2, 23) et montée en rotation autour d'un axe substantiellement vertical, pour une orientation dans l'axe vertical au moyen d'un dispositif d'entraînement, ainsi que des moyens pour une orientation dans un axe horizontal par pivotement du module photovoltaïque (2, 23), dans lequel un couplage mécanique de l'orientation verticale et horizontale est prévu qui provoque l'orientation dans l'axe horizontal par l'intermédiaire d'un mouvement de réglage du dispositif d'entraînement pour l'axe vertical, **caractérisé en ce que** pour le couplage mécanique, un moyen de transmission (7) monté pivotant entre le module photovoltaïque (2, 23) et la structure de support (3, 13, 24, 34, 42a, 42b, 55) est prévu pour transmettre le mouvement de réglage au module photovoltaïque (2, 23) pour l'orientation dans l'axe horizontal, dans lequel le moyen de transmission (7) comprend une tringlerie (8, 21, 38, 58) et un élément fourchu couplé (9, 20, 29, 47a, 47b) couplé avec celle-ci qui attaque ou s'engage au niveau d'un anneau à came (6, 17, 28, 46a, 46b) et/ou d'un disque à came (33, 54).

2. Dispositif d'orientation selon la revendication 1, **caractérisé en ce que** l'anneau à came (6, 17, 28, 46a, 46b) ou le disque à came (33, 54) est disposé autour de la structure de support (3, 13, 24, 34, 42a, 42b, 55) et/ou serré, en particulier au moyen d'au moins un élément de serrage (10, 18, 26, 36, 45a, 45b), sur un élément de fixation (4, 19, 25, 35, 43a, 43b).

3. Dispositif d'orientation selon la revendication 1 ou 2, **caractérisé en ce que** l'anneau à came ou le disque à came (54) ou un segment d'un anneau à came ou d'un disque à came est monté en rotation autour de l'axe vertical et peut être entraîné par un dispositif d'entraînement séparé.

4. Dispositif d'orientation selon l'une quelconque des revendications précédentes, **caractérisé en ce que** dans une installation photovoltaïque (40) avec au moins deux modules photovoltaïques (2, 23), le dispositif d'orientation (1, 12, 22, 32, 39a, 39b, 53) est relié par l'intermédiaire d'au moins un moyen d'enroulement, en particulier d'un câble (16) et/ou d'une bande et/ou d'une courroie (31) et/ou d'une chaîne (49), à au moins un autre dispositif d'orientation (1, 12, 22, 32, 39a, 39b, 53) associé à un autre module photovoltaïque (2,23).

5. Dispositif d'orientation selon l'une quelconque des revendications précédentes, **caractérisé en ce que** pour la transmission du mouvement de réglage à la structure de support (3, 13, 24, 34, 42a, 42b, 55), un élément d'entraînement (11, 27, 37, 50a, 50b, 57) fixé à la structure de support (3, 13, 24, 34, 42a, 42b, 55), en particulier un élément d'anneau ou de disque entourant la structure de support (3, 13, 24, 34, 42a, 42b, 55) de façon substantiellement concentrique, est prévu.

6. Dispositif d'orientation selon l'une quelconque des revendications précédentes, **caractérisé en ce que** la plage de pivotement pour l'orientation dans l'axe horizontal se situe entre 0° pour un agencement horizontal du module photovoltaïque (2, 23) et 60°.

7. Dispositif d'orientation selon l'une quelconque des revendications précédentes, **caractérisé en ce que** pour transmettre le mouvement de réglage à la structure de support (3, 13, 24, 34, 42a, 42b), au moins un élément de transmission est prévu, attaquant en particulier au niveau d'un élément d'entraînement (11, 27, 37, 50a, 50b, 57).

8. Dispositif d'orientation selon la revendication 7, **caractérisé en ce que** l'élément de transmission correspond à un moyen d'enroulement, en particulier à un câble (16), à une bande, à une courroie (31) ou à une chaîne (49), entre deux dispositifs d'orientation (1, 12, 22, 32, 39a, 39b).

9. Dispositif d'orientation selon l'une quelconque des revendications précédentes, **caractérisé en ce que** pour plusieurs dispositifs d'orientation (1, 12, 22, 32, 39a, 39b, 53) reliés entre eux, une orientation des dispositifs d'orientation (1, 12, 22, 32, 39a, 39b, 53) multiples peut être obtenue par un seul mouvement de réglage, en particulier d'un seul dispositif d'entraînement (52).

10. Dispositif d'orientation selon l'une quelconque des revendications précédentes, **caractérisé en ce qu'**un dispositif d'entraînement (52) manuel et/ou hydraulique et/ou électrique, en particulier un moteur électrique, est prévu pour générer le mouvement de réglage pour l'orientation.

11. Dispositif d'orientation selon l'une quelconque des revendications précédentes, **caractérisé en ce que** le dispositif d'entraînement (52) peut être commandé par l'intermédiaire d'un dispositif de commande.

12. Installation photovoltaïque, comprenant au moins un dispositif d'orientation (1, 12, 22, 32, 39a, 39b, 53) selon l'une quelconque des revendications précédentes.
